# EUROPEAN PATENT SPECIFICATION

(11) **EP 2 155 936 B1**
(45) Date of publication and mention of the grant of the patent: **07.11.2012**
(21) Application number: 07808052.0
(22) Date of filing: 04.09.2007
(51) Int. Cl.: D01F 2/02, D07B 1/06, B60C 9/00

(54) **LYOCELL FIBER FOR TIRE CORD AND TIRE CORD COMPRISING THE SAME**
LYOCELLFASER FÜR REIFENKORD UND SIE ENTHALTENDER REIFENKORD
FIBRE LYOCELL POUR CÂBLE À PNEUS ET CÂBLE À PNEUS LA COMPORTANT

(30) Priority: 11.06.2007 KR 20070056841
(43) Date of publication of application: 24.02.2010
(73) Proprietor: Kolon Industries, Inc., Kyungki-do 427-709 (KR)
(72) Inventor: OH, Young-Se, Busan 616-120 (KR); KWON, So-Yeon, Busan 616-112 (KR); JEONG, Jong-Cheol, Seoul 120-103 (KR)
(74) Representative: Merkle, Gebhard
(86) International application number: PCT/KR2007/004254
(87) International publication number: WO 2008/153240

(56) References cited:
- KR-A- 20050 003 126
- KR-A- 20050 012 439
- US-A1- 2005 079 348
- US-A1- 2006 083 918
- ZHANG H. ET AL.: 'Effect of Heat Treatment on the Structure and Properties of Lyocell Fibers' JOURNAL OF APPLIED POLYMER SCIENCE vol. 101, 2006, pages 1738 - 1743, XP008120955

## Description

### BACKGROUND OF THE INVENTION

### Field of the Invention

The present invention relates to a lyocell fiber for a tire cord and a tire cord comprising the same. More particularly, the present invention relates to a lyocell fiber and a tire cord comprising the same that has superior strength, elongation, and modulus compared to rayon of the related art, and has excellent dimensional stability for a tire even under harsh conditions during high speed driving of an automobile, and even when a wet-treatment and a dry-treatment under high temperature and high pressure conditions are performed.

### Description of Related Art

Generally, a tire cord in a tire is used as an internal framework of the tire to uniformly maintain a tire shape and improve riding comfort. The tire cord is usually made of a material such as nylon, polyester, aramid, rayon, and the like.

In this regard, it is required to have physical properties of high strength and initial modulus, no degradation under dry heat and wet heat, excellent shape stability and fatigue resistance, and excellent adhesiveness to rubber.

Since nylon has high tensile elongation and tenacity, it is usually used in tires for heavy-duty trucks and also in tires for off-road conditions having many winding surfaces causing an uneven load. However, since nylon allows heat to be locally accumulated in the inner part of the tire and has a low modulus, it is not appropriate for high-speed and ride-comfort tires for automobile.

Polyester has excellent shape stability and price competitiveness compared with nylon and is being improved in strength and adhesive force through continued research. Therefore, use of polyester is on the rise in the tire cord field. However, since polyester still has disadvantages in that heat-resistance and adhesive force are low, it is not appropriate for high-speed tires.

Rayon is a regenerated cellulous fiber and has excellent heat-resistance and shape-stability, and a high elastic coefficient at high temperature. Therefore, tire cords formed of rayon are generally used for premium tires such as radial tires and run-flat tires. However, since rayon has a disadvantage in that tenacity is severely deteriorated by moisture, extensive moisture control is required during the manufacturing process of the tires and a generation rate of defective goods is high due to non-uniformity during the manufacturing process of rayon yarn. More than anything else, since the performance (tenacity) of rayon is very low compared with other materials, while also being expensive, it is usually only used for ultrahigh-speed tires or premium tires.

Recently, lyocell fiber has been used as a substitute material for rayon. Lyocell fiber has strength and modulus that are superior to those of rayon, and heat resistance and shape stability that are equal to those of rayon. Further, lyocell fiber maintains physical properties that are relatively excellent after a wet-treatment.

KR 2005 0012439 discloses a method for manufacturing a lyocell tyre cord for a vehicle tire cap ply.

US 2006/083918 discloses a method and a device for producing lyocell fibres from a spinning solution containing water, cellulose and tertiary amine oxide.

Zhang H. et al.: "Effect of heat treatment on the structure and properties of lyocell fibres", Journal of applied polymer science, vol. 101, 2006, pages 1738-1743, XP008120955 describes how the structural properties of lyocell fibres are effected under the influence of a heat treatment.

### SUMMERY OF THE INVENTION

Embodiments of the present invention provide a lyocell fiber that has superior strength, elongation, and modulus compared with those of rayon of the related art even when a wet-treatment and a dry-treatment under high temperature and high pressure conditions are performed, and has excellent dimensional stability for a tire even under harsh conditions during high speed driving of an automobile, and a tire cord comprising the lyocell fiber.

### BRIEF DESCRIPTION OF DRAWINGS

A more complete appreciation of the present invention and many of the attendant features and advantages thereof will be readily apparent as the present invention becomes better understood by reference to the following detailed description when considered in conjunction with the accompanying drawings in which like reference symbols indicate like components.
FIG 1 is a schematic diagram of a spinning machine for manufacturing lyocell fiber according to an exemplary embodiment of the present invention.
FIG 2 is an enlarged schematic diagram of a water-washing section device of the spinning machine shown in FIG 1.

### DETAILED DESCRIPTION OF THE EXEMPLARY EMBODIMENTS

To attain the object, the present invention provides a lyocell fiber according to claim 1.

In addition, the present invention provides a tire cord comprising the lyocell fiber.

An exemplary embodiment of the present invention will now be described in more detail.

The present invention was conceived during research to find a solution to rayon's tenacity deterioration problem caused by moisture and rayon's dimensional stability deterioration problem under harsh conditions during high-speed driving of an automobile under high temperature and high pressure conditions. It was identified that lyocell fiber has excellent physical properties due to moisture absorption after the lyocell fiber is prepared by being wet-treated with specific water-washing conditions during a spinning process, and even under harsh conditions with high temperature and high pressure.

The lyocell fiber of the present invention is manufactured by the steps of wet-treating a lyocell fiber used for a tire cord with a moisturizing solution (preferably water), and removing the moisture from the wet-treated lyocell fiber.

A structure of an amorphous region of the lyocell fiber varies when a chain bond of the dried lyocell fiber absorbs moisture, and a hydrogen bond between a chain of the lyocell fiber is weakened. Subsequently, if the lyocell fiber is dried again by a dry-treatment, the physical properties of the lyocell fiber become improved compared with the physical properties before the wet-treatment and dry-treatment, when measured under standard conditions.

The wet-treatment of the lyocell fiber of the present invention is performed by dipping the lyocell fiber under a saturation vapor pressure state for 10 minutes at a high temperature of 120°C Further, the lyocell fiber may be forcedly wet-treated by using an autoclave.

The dry-treatment of the wet-treated lyocell fiber is performed for 2 hours at a high temperature of 130°C with a hot wind dry oven.

When the lyocell fiber goes through the above harsh treatments (i.e., when the lyocell fiber is wet-treated by dipping the lyocell fiber under the saturation vapor pressure for 10 minutes at the temperature of 120°C and is subsequently dried for 2 hours at the temperature of 130°C) strength thereof becomes greater than that of an untreated lyocell fiber.

Specifically, when.the lyocell fiber is wet-treated by dipping the lyocell fiber under the saturation vapor pressure for 10 minutes at the temperature of 120°C and is subsequently dried for 2 hours at the temperature of 130 °C, the strength thereof becomes about 101-120% (preferably, 101-110%) of the strength of the untreated lyocell fiber.

Further, when the lyocell fiber is wet-treated by dipping the lyocell fiber under the saturation vapor pressure for 10 minutes at the temperature of 120°C and is subsequently dried for 2 hours at the temperature of 130°C, elongation thereof is maintained at 80% or more of the elongation of the untreated lyocell fiber.

More specifically, when the lyocell fiber is wet-treated by dipping the lyocell fiber under the saturation vapor pressure for 10 minutes at the temperature of 120°C and is subsequently dried for 2 hours at the temperature of 130°C, the elongation thereof is 80-99% of the elongation of the untreated lyocell fiber.

Further, when the lyocell fiber is wet-treated by dipping the lyocell fiber under the saturation vapor pressure for 10 minutes at the temperature of 120°C and is subsequently dried for 2 hours at the temperature of 130°C, the modulus thereof is maintained at 80% or more of the modulus of the untreated lyocell fiber.

More specifically, when the lyocell fiber is wet-treated by dipping the lyocell fiber under the saturation vapor pressure for 10 minutes at the temperature of 120°C and is subsequently dried for 2 hours at the temperature of 130°C, the modulus thereof becomes 80-110% of the modulus of the untreated lyocell fiber.

In the present invention, the strengths, elongations, and modulus are measured under conventional standard conditions (i.e., 25 °C, 65% RH).

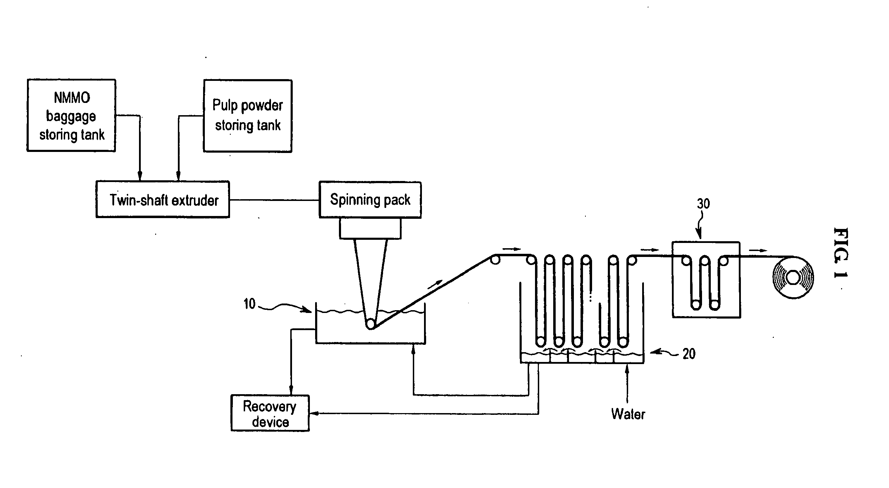

In addition, the manufacturing method of lyocell fiber of the present invention used for forcedly wetting in a moisturizing solution comprises the steps of dissolving cellulous in N-methyl morpholine-N-oxide (hereinafter, referred to as "NMMO"), water, or a mixed solvent of NMMO and water as a spinning solution to prepare a yam dope performing a spinning of a cellulous-based fiber from the yam dope by using a spinning machine having a nozzle, washing the cellulous-based fiber using water, drying and oiling the washed cellulous-based fiber, and winding the resulting cellulous-based fiber. At this point, according to the present invention, since the lyocell fiber is manufactured by the spinning machine illustrated in FIG 1, the lyocell fiber can obtain the above-described physical properties after the wet-treatment.

The following will describe a method of manufacturing a lyocell fiber of an exemplary embodiment of the present invention with reference to the accompanying drawings.

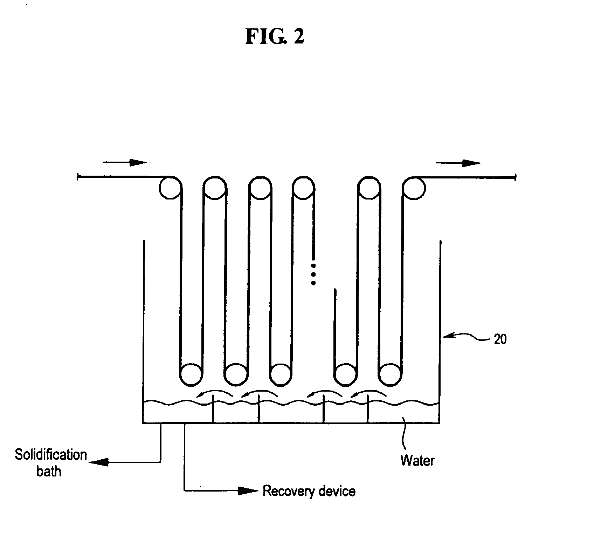

FIG 1 is a schematic diagram of a spinning machine for manufacturing lyocell fiber according to an exemplary embodiment of the present invention, and FIG 2 is an enlarged schematic diagram of a water-washing device of the spinning machine depicted in FIG 1.

As shown in FIG 1, a cellulous sheet is loaded in a crusher having a screen filter and is crushed into a powder. The cellulous powder is stored in a pulp powder storing tank. Then, a mixture of the cellulous powder and a liquid-phase spinning solution is injected into a feeding part of a twin-shaft extruder. The liquid-phase spinning solution may be NMMO.

Next, the mixture is changed into a uniform solution through a kneading part and a dissolving part, and then is spun in a vertical solidification bath 10 through a spinning nozzle mounted on a spinning pack, and is thereby changed into a filament. The solidified filament in the vertical solidification bath 10 passes through a water-washing device 20 such that NMMO contained therein can be removed by water, without any NMMO components remaining.

Subsequently, the filament that has passed through the water-washing device 20 is dried in a drying device 30, and a final lyocell fiber is obtained by winding the filament.

The following will describe the water-washing device in more detail with reference to FIG 2. A water-washing section in the water-washing device 20 of the present invention consists of horizontal rollers in upper and lower parts, and a container of water-washing solution under the lower horizontal rollers. Therefore, the water-washing device 20 may be used as a multi-section water-washing device having a plurality of water-washing sections. The number of water-washing sections is 3 to 10. The time that the filament is passed through the water-washing device corresponds with the spinning speed, and is 30 seconds to 90 seconds.

Further, water not having any AMMO component is fed to a first final water-washing section and sprayed onto the filament bundle passing through the rollers to remove the NMMO contained in the filament. Subsequently, water is directed to a second final water-washing section and sprayed onto the filament passing through the rollers to remove any remaining NMMO contained in the filament. Next, the water flows to a second section ahead of the final water-washing section. However, the water-washing process is not limited to a spraying method, and alternatively a method where the filament bundle is dipped in a washing solution of a water-washing bath when passing through on the rollers may be applied, or various other methods for washing may be used.

The washing solution collected in a first water-washing section after the series of processes contains a large amount of NMMO. The NMMO comprised in the washing solution is recycled by being recovered to the solidification bath or a recovery device. The amount of NMMO contained in the washing solution collected in the first water-washing section varies depending on the amount of water fed to the final water-washing section and has an affect on the physical properties of the resulting fiber.

According to one embodiment, the amount of NMMO of the washing solution collected in the first water-washing section may be adjusted to 3-25 wt%.

Furthermore, a concentration of NMMO at the final water-washing section of the water-washing device may be equal to or less than 200 ppm.

The lyocell filament yam may be dried through the drying device 30 at a temperature of 100 to 200°C under an atmospheric pressure.

In addition, the spinning solution may be prepared by expanding the cellulous in a mixed solvent of NMMO and water, which are mixed in the range of a weight ratio of 90:10 to 50:50, and removing water from the mixed solvent such that the mixed solvent comprises NMMO and water that are mixed in the range of a weight ratio of 93:7-85:15 and 7-18 wt% of the cellulous. However, these ranges of the weight ratio of the mixed solvent and the wt% of the cellulose are only by way of example, and thus the present invention is not limited to the above configuration.

As described above, the lyocell fiber of the present invention can be manufactured in the form of a tire cord through S twisting (clockwise twisting) and Z twisting (counterclockwise twisting) processes and an adhesive applying process. At this point, the twisting number in S twisting and Z twisting processes may be 200-600 TPM. The adhesive applied to the lyocell fiber may be any conventional adhesive for a tire cord, and may be an RFL solution. A drying temperature and heat-treatment conditions for the adhesive are set based on conventional process conditions. The above-described tire cord manufacturing method may vary as necessary, and thus the present invention is not limited to the above described method.

The following will describe Examples of the present invention. The present invention should not be construed as being limited to the following examples set forth herein; rather these examples are provided so that this disclosure will be thorough and complete, and will fully convey the concept of the invention to those skilled in the art.

### Comparative Example 1

The wet-treatment was performed by dipping rayon of 1666 denier (SUPPER III, product of CORDENKA Co. Ltd.) in an autoclave for 10 minutes at 120 °C under a saturated vapor pressure. Rayon before the wet-treatment and rayon that was dried for 2 hours at 130°C under an atmospheric pressure and left for 2 hours under standard conditions (25 °C, 65% RH) following the wet-treatment were obtained and repeatedly tested 5 times to obtain mean values of the physical properties. The results are shown in Table 1.

### Examples 1 to 8

The lyocell fiber was manufactured by using the spinning machine shown in FIG 1. A cellulous (content of α-cellulous equal to or greater than 96%: V-81, Buckeye Company) sheet was loaded in the crusher having a screen filter and crushed into a powder. The cellulous powder was stored in the pulp powder storing tank. The cellulous powder and a liquid-phase NMMO (89°C, 13% moisture content, feeding speed=6,000g/h) were injected into a feeding part of a twin-shaft extruder (screw diameter (D) = 48mm, L/D = 52) having a screw rotational speed of 120 RPM and a temperature of 80°C. The mixture of the cellulous powder and the liquid-phase NMMO were changed into a uniform solution while passing through a kneading part and a dissolving part. The uniform solution was spun in a vertical solidification bath 10 through the spinning pack on which the spinning nozzle (diameter = 0.2mm, number of orifices = 1,000) was mounted. The NMMO in the solidified filament in the solidification bath 10 was removed by water not having any NMMO component in the water-washing device 20. The water-washing device 20 comprises, as shown in FIG 2, horizontal rollers in upper and lower parts, and a container of water-washing solution under the lower horizontal rollers. In the Examples of the present invention, a water-washing device having ten water-washing sections was used. In the Examples of the present invention, a fed amount of the washing solution was adjusted such that the washing solution collected in the first water-washing section comprises 3, 6, 10, 12, 15, 17, 20, and 25 wt% of NMMO respectively in Examples 1, 2, 3, 4, 5, 6, 7, and 8. Thereafter, a filament was obtained by drying in the drying device 30 and winding the lyocell filament.

The wet-treatment was performed by dipping lyocell filaments of 1750 denier of Examples 1 to 8 in an autoclave for 10 minutes at 120°C under a saturated vapor pressure. Rayon before the wet-treatment and rayon after being dried for 2 hours at 130°C under an atmospheric pressure and left for 2 hours under standard conditions (25 °C, 65% RH) following the wet-treatment were obtained and repeatedly tested 5 times to obtain mean values of the physical properties. The results are shown in Table 1.

### Comparative Examples 2 and 3

Comparative Examples 2 and 3 were performed the same as Examples I to 8, except that a fed amount of the washing solution was adjusted such that the washing solution collected in the first water-washing section comprises 1 wt% of NMMO (Comparatives Example 2) and 30 wt% of NMMO (Comparative Example 3).

The wet-treatment was performed by dipping lyocell filaments of 1750 denier of Comparatives Examples 2 to 3 in an autoclave for 10 minutes at 120 °C under a saturated vapor pressure. Rayon before the wet-treatment and rayon after being dried for 2 hours at 130°C under an atmospheric pressure and left for 2 hours under standard conditions (25 °C, 65% RH) following the wet-treatment were obtained and repeatedly tested 5 times to obtain mean values of the physical properties. The results are shown in Table 1.

**[Table 1]**

| | Before Wet-Treatment | | | After Wet-Treatment | | |
|---|---|---|---|---|---|---|
| | Strength (g/d) | Elongation (%) | Modulus (g/d) | Strength (g/d) | Elongation (%) | Modulus (g/d) |
| Examplel 1 | 5.64 | 8.56 | 165.5 | 5.65 | 6.56 | 142.83 |
| Example 2 | 5.54 | 8.42 | 180.2 | 5.61 | 6.42 | 151.25 |
| Example3 | 5.67 | 8.53 | 191.55 | 5.55 | 6.5 | 134.62 |
| Example 4 | 5.71 | 8.42 | 180.7 | 5.72 | 6.47 | 144.72 |
| Example5 | 5.66 | 8.11 | 180.77 | 5.95 | 7.09 | 142.94 |
| Example 6 | 5.56 | 8.21 | 170.9 | 5.83 | 6.31 | 150.24 |
| Example7 | 5.47 | 7.71 | 185.63 | 5.59 | 6.62 | 145.62 |
| Example8 | 5.64 | 8.17 | 187.24 | 5.38 | 6.3 | 150.02 |
| Comparative Example 1 | 5.83 | 11.51 | 137.358 | 5.038 | 20.682 | 97.328 |
| Comparative Example 2 | 5.42 | 9.21 | 151.24 | 5.31 | 6.35 | 130.29 |
| Comparative Example 3 | 5.12 | 10.2 | 171.28 | 5.09 | 7.21 | 129.84 |

As shown in Table 1, the lyocell fibers of Examples 1 to 8, each having 3-25 wt% of NMMO, maintained or improved strength thereof, and maintained 80% or more elongation and modulus of the untreated lyocell fibers, even after they were dipped to perform a wet-treatment.

On the other hand, the strength and modulus of the rayon fiber of Comparative Example 1 after the wet-treatment was steeply reduced compared to the physical properties before the treatment, as shown in Table 1. Thus, it can be noted that tenacity of the rayon fiber is severely deteriorated by moisture, and the dimensional stability was remarkably decreased due to inordinately high elongation. In addition, from Comparative Examples 2 and 3, it can be noted that a content of NMMO outside the range of the present invention deteriorates strength, elongation, and modulus of the lyocell fibers.

According to the present invention, since the lyocell fiber is manufactured with specific water-washing conditions, strength is improved compared with that of rayon of the related art even when it is wet-treated and dry-treated under high temperature and high pressure conditions, and elongation and modulus are maintained at 80% or more of the untreated lyocell fiber, measured under standard conditions. Therefore, the lyocell fiber of the present invention improves dimensional stability of a tire cord even under harsh conditions during high-speed driving of an automobile when it is applied to the tire cord.

Although exemplary embodiments of the present invention have been described in detail hereinabove, it should be clearly understood that many variations and/or modifications of the basic inventive concept taught herein still fall within the spirit and scope of the present invention, as defined by the appended claims.

## Claims

1. A lyocell fiber to which is performed a wet-treatment under a saturation vapor pressure state for 10 minutes at a temperature of 120°C and then subsequently a dry-treatment for 2 hours at a temperature of 130°C, wherein the strength of the lyocell fiber is higher than the strength of the untreated lyocell fiber, when measured under standard conditions,
wherein the elongation of the lyocell fiber is maintained at 80 % or more of the elongation of the untreated lyocell fiber, when measured under standard conditions,
wherein the modulus of the lyocell fiber is maintained at 80 % or more of the modulus of the untreated lyocell fiber, when measured under standard conditions,
wherein the lyocell fiber is obtained by using the spinning machine comprising multi-section water-washing device having a plurality of water-washing sections,
wherein the water-washing section consists of horizontal rollers in upper and lower parts, and a container of water-washing solution under the lower horizontal rollers,
wherein the number of water-washing sections is 3 to 10,
wherein the time that the filament for preparing lyocell fiber is passed through the water-washing device is 30 seconds to 90 seconds.

2. The lyocell fiber of claim 1, wherein the strength of the lyocell fiber is 101-120 % of the strength of the untreated lyocell fiber, when measured under standard conditions.

3. The lyocell fiber of claim 2, wherein the strength of the lyocell fiber is 101-110 % of the strength of the untreated lyocell fiber, when measured under standard conditions.

4. The lyocell fiber according to claim 1, wherein the elongation of the lyocell fiber is maintained at 80-99 % of the elongation of the untreated lyocell fiber, when measured under standard conditions.

5. The lyocell fiber according to claim 1, wherein the modulus of the lyocell fiber is maintained at 80-110 % of the modulus of the untreated lyocell fiber, when measured under standard conditions.

6. A tire cord comprising the lyocell fiber according to any one of claims 1 to 5.

## Patentansprüche

1. Lyocellfaser, an welcher eine Nassbehandlung unter dem Zustand eines Sättigungsdampfdrucks während 10 Minuten bei einer Temperatur von 120°C und daran anschließend eine Trockenbehandlung während 2 Stunden bei einer Temperatur von 130°C durchgeführt wird, wobei die Festigkeit der Lyocellfaser höher ist als die Festigkeit der unbehandelten Lyocellfaser, gemessen unter Standardbedingungen,
wobei die Dehnung der Lyocellfaser bei 80% oder mehr der Dehnung der unbehandelten Lyocellfaser beibehalten wird, gemessen unter Standardbedingungen,
wobei der Modul der Lyocellfaser bei 80% oder mehr des Moduls der unbehandelten Lyocellfaser beibehalten wird, gemessen unter Standardbedingungen,
wobei die Lyocellfaser erhalten wird durch Verwendung einer Spinnmaschine, umfassend eine mehrteilige Wasserwaschvorrichtung mit einer Vielzahl von Wasserwaschabschnitten,
wobei der Wasserwaschabschnitt aus horizontalen Walzen in oberen und unteren Teilen und einem Behälter für eine Wasserwaschlösung unter den unteren horizontalen Walzen besteht,
wobei die Anzahl der Wasserwaschabschnitte 3 bis 10 beträgt,
wobei die Zeit, während der das Filament zur Herstellung der Lyocellfaser durch den Wasserwaschabschnitt geführt wird, 30 Sekunden bis 90 Sekunden beträgt.

2. Lyocellfaser nach Anspruch 1, wobei die Festigkeit der Lyocellfaser 101-120% der Festigkeit der unbehandelten Lyocellfaser beträgt, gemessen unter Standardbedingungen.

3. Lyocellfaser nach Anspruch 2, wobei die Festigkeit der Lyocellfaser 101-110% der Festigkeit der unbehandelten Lyocellfaser beträgt, gemessen unter Standardbedingungen.

4. Lyocellfaser nach Anspruch 1, wobei die Dehnung der Lyocellfaser bei 80-99% der Dehnung der unbehandelten Lyocellfaser beibehalten wird, gemessen unter Standardbedingungen.

5. Lyocellfaser nach Anspruch 1, wobei der Modul der Lyocellfaser bei 80-110% des Moduls der unbehandelten Lyocellfaser beibehalten wird, gemessen unter Standardbedingungen.

6. Reifenkord, umfassend die Lyocellfaser gemäß mindestens einem der Ansprüche 1 bis 5.

## Revendications

1. Fibre lyocell sur laquelle est réalisée un traitement humide dans un état de pression de vapeur saturante pendant 10 minutes à une température de 120 °C et ensuite un traitement à sec pendant 2 heures à une température de 130 °C, dans laquelle la résistance de la fibre lyocell est plus élevée que la résistance de la fibre lyocell non traitée, lorsqu'elle est mesurée dans des conditions standard,
dans laquelle l'élongation de la fibre lyocell est maintenue à 80 % ou plus de l'élongation de la fibre lyocell non traitée, lorsqu'elle est mesurée dans des conditions standard,
dans laquelle le module de la fibre lyocell est maintenu à 80 % ou plus du module de la fibre lyocell non traitée, lorsqu'il est mesuré dans des conditions standard,
dans laquelle la fibre lyocell est obtenue en utilisant la machine à filer comprenant un dispositif de lavage hydraulique multisection comprenant une pluralité de sections de lavage hydraulique,
dans laquelle la section de lavage hydraulique comprend des rouleaux horizontaux dans les parties supérieure et inférieure, et un contenant de la solution de lavage hydraulique sous les rouleaux horizontaux inférieurs,
dans laquelle le nombre de sections de lavage hydraulique est de 3 à 10,
dans laquelle le temps que le filament pour la préparation de la fibre lyocell passe dans le dispositif de lavage hydraulique est de 30 secondes à 90 secondes.

2. Fibre lyocell selon la revendication 1, dans laquelle la résistance de la fibre lyocell est de 101 à 120 % de la résistance de la fibre lyocell non traitée, lorsqu'elle est mesurée dans des conditions standard.

3. Fibre lyocell selon la revendication 2, dans laquelle la résistance de la fibre lyocell est de 101 à 110 % de la résistance de la fibre lyocell non traitée, lorsqu'elle est mesurée dans des conditions standard.

4. Fibre lyocell selon la revendication 1, dans laquelle l'élongation de la fibre lyocell est maintenue à 80 à 99 % de l'élongation de la fibre lyocell non traitée, lorsqu'elle est mesurée dans des conditions standard.

5. Fibre lyocell selon la revendication 1, dans laquelle le module de la fibre lyocell est maintenu à 80 à 110 % du module de la fibre lyocell non traitée, lorsqu'il est mesuré dans des conditions standard.

6. Câble pour pneu comprenant la fibre lyocell selon l'une quelconque des revendications 1 à 5.
